(19) **Europäisches Patentamt**
**European Patent Office**
**Office européen des brevets**

(11) **EP 1 712 767 B1**

(12) **EUROPEAN PATENT SPECIFICATION**

(45) Date of publication and mention
of the grant of the patent:
**02.01.2008 Bulletin 2008/01**

(51) Int Cl.:
*F02D 41/24* $^{(2006.01)}$     *G05B 13/02* $^{(2006.01)}$

(21) Application number: **05102979.1**

(22) Date of filing: **15.04.2005**

(54) **Method for automatically adapting lookup tables**

Verfahren zur automatischen Anpassung der Lookup-Tabellen

Procédé pour adapter automatiquement des tables de consultation

(84) Designated Contracting States:
**DE FR GB**

(43) Date of publication of application:
**18.10.2006 Bulletin 2006/42**

(73) Proprietor: **Ford Global Technologies, LLC**
**Dearborn, MI 48126 (US)**

(72) Inventors:
• **Chevalier, Alain**
**4841, Henri-Chapelle (BE)**
• **Christen, Urs**
**52072, Aachen (DE)**

• **Vantine, Katie**
**52062, Aachen (DE)**
• **Moraal, Paul Eduard**
**6291 VP, Vaals (AN)**

(74) Representative: **Drömer, Hans-Carsten et al**
**Ford-Werke Aktiengesellschaft,**
**Patentabteilung NH/DRP,**
**Henry-Ford-Strasse 1**
**50725 Köln (DE)**

(56) References cited:
**WO-A-00/53911**     **US-A- 5 063 510**
**US-A- 5 713 332**     **US-A1- 2003 122 826**

**Description**

The present invention relates to a method for automatically adapting lookup tables, in particular for using in a control unit for an internal combustion engine, wherein the lookup table is a one-dimensional or multi-dimensional point-based lookup table with $n \geq 1$ indexing parameters as input data and in which the output data are stored at the points.

In a system - like an internal combustion engine - the functionality of several dependent variables can be described in terms of numeric data stored in table or multi-dimensional array format. The resulting table or array is referred to as a lookup table and is well known in the art.

As mentioned lookup tables are used for controlling an internal combustion engine, for example. Modem control systems for engines often use torque demand T, which is generated from gas pedal position and torque losses, and the engine speed N as the most important input data for the lookup tables in question. These input data are utilized by many engine control substructures, for instance to control the boost pressure, the exhaust gas recirculation (EGR) or within a fuel injection control substructure. Within fuel control torque demand T and engine speed N are used as input data to read from the respective lookup tables injection-timing, injection duration and fuel mass. Sometimes additional input data have to be taken into account. For example, the rail pressure has to be taken into consideration within the fuel control. The lookup tables are usually stored in an engine control unit (ECU).

In the simpler two-dimensional case, lookup tables correspond to matrices well known in the field of mathematics. Each element of a matrix is a numerical quantity, which can be precisely located in terms of two indexing variables. At higher dimensions, lookup tables are represented as a collection of matrices, whose elements are described in terms of a corresponding number of indexing variables. In the simplest case, when an element only depends on one variable (one-dimensional), the lookup table consists of one column or row.

Each indexing parameter may take on values from a pre-determined set of values, which are called breakpoints. Starting from the two-dimensional case, a lookup table could be visualized as a grid, whereby between the grid lines several cells are formed. The number of cells corresponds to the number of locations and stored elements, respectively. Such a lookup table is called a cell-based lookup table.

In prior lookup tables, once a lookup table is created using system input and output data, the corresponding one-dimensional or multi-dimensional array of values can be used in applications without the need of updating the system output data, i.e., the stored elements. Only the input data is required to locate the appropriate array elements in the lookup table, and the approximate output data can be read from these locations. Therefore, a lookup table captures an input-output mapping of a static or dynamic system in the form of numeric data at predetermined array locations.

Such static lookup tables could be used within a feedforward (open-loop) control for fast controller actions. However, the disadvantage of feedforward control is that it cannot be accurate when ambient conditions, i.e., boundary conditions are changing and influencing the characteristics of the object to be controlled. For example, the wear of the engine components could result in a mutated behaviour of the engine. The aging of the cylinder liner surface and/or the damage of a piston ring and/or the changing of the tolerances could result in lower or higher engine friction.

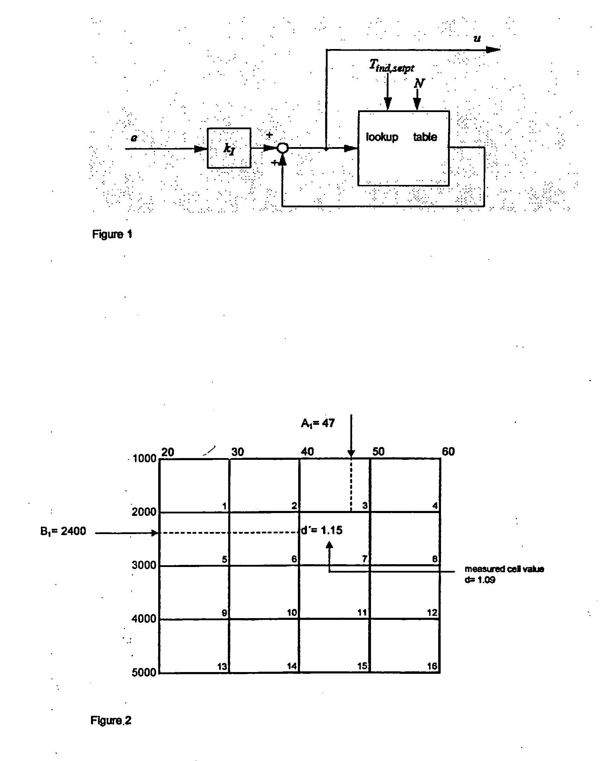

A possible way out of this dilemma is the use of adaptive lookup tables for feedforward control. Figure 1 shows a possible controller setup. The storage element (output data) of a discrete-time integrating controller is expanded to be scheduled based on signals (input data) describing the operating conditions of the control object. According to the example illustrated in Figure 1 the object to be controlled is a combustion engine. As mentioned above input data may be torque demand - here indicated torque demand $T_{ind,setpt}$ - and engine speed N, so that the shown example represents a two-dimensional case in the above mentioned sense.

Changes in the output signal u, due to changing operating conditions (modified torque $T_{ind,setpt}$ and/or modified speed N), are then achieved very quickly because the modified input data define another location in the lookup table and the corresponding output data can be read from this location. Slow changes at a given operating condition, i.e., at a stationary engine operating point, due to wear or changes of boundary conditions, are slowly compensated by updating the output data, i.e., storing the changed output signal in the respective cell or location, respectively. For this purpose the gain $k_1$ of the controller is very small, because feedback control in the presence of signal noise has to be slow.

Such a control setup provides, once adaptation has taken place, accurate feedforward control and can be tuned to be insensitive to signal noise in the control error e, and to be robust with respect to instability. There is a clear separation in the frequency domain between the feedforward action and the feedback adaptation.

Such lookup tables are known as so-called adaptive or learning lookup tables. The US 2003/0122826 A1 relates to adaptive lookup tables. Figure 2 shows a cell-based embodiment disclosed in the US 2003/0122826 A1.

A lookup table relating to a two-dimensional case is visualized by a grid defining sixteen cells. The five breakpoints of the first indexing parameter A take on values from 20 to 60 with an increment of 10. The five breakpoints of the second indexing parameter B take on values from 1000 to 5000 with an increment of 1000. If the current operating point $(A_1 = 47, B_1 = 2400)$ lies within a cell, the output data $d' = 1.15$ stored in this location, i.e., cell is assigned to the operating point in question and can be read out. Furthermore if the stored element d has changed due to changed boundary conditions this element can be updated, i.e., adapted. For this the measured value $d = 1.09$ is used for updating the respective cell. One type of adaptation algorithm that can be employed is Recursive Sample Mean, which provides the average value of several measured output data $d$.

Alternatively a point-based lookup table could be used. Such a lookup table is shown in Figure 3 which illustrates an embodiment also disclosed in the mentioned US 2003/0122826 A1.

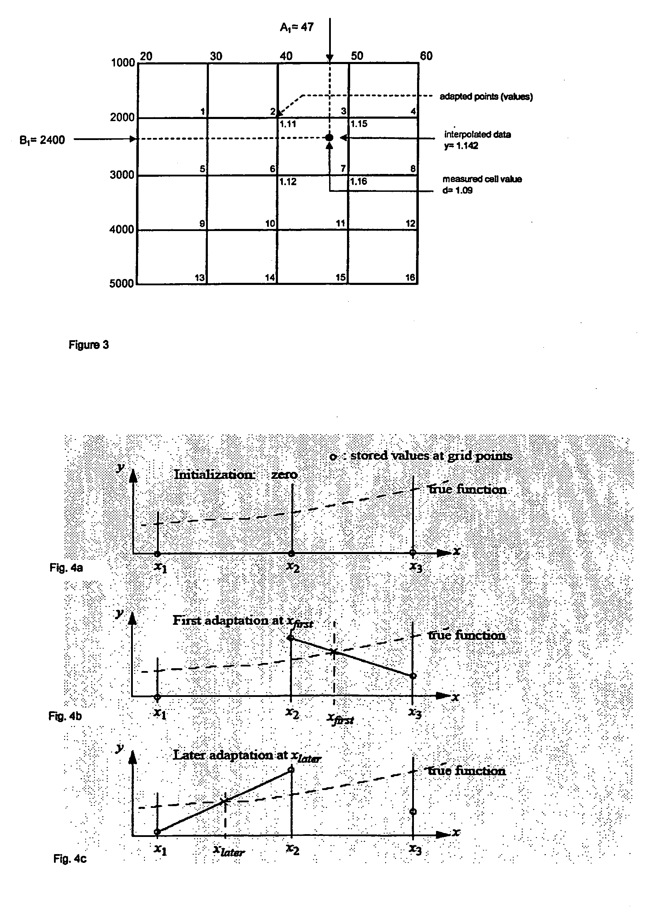

In contrast to the cell-based lookup table described before the output data are stored at the points defined by the intersections of the gridlines and not within the cells. Figure 3 shows an example of a two-dimensional point-based lookup table, where each gridpoint represents a storage location for an output data. If an operating point coincides exactly with a dot, no problems arise by reading the respective stored element. If an operating point $(A_1 = 47, B_1 = 2400)$ lies within a cell the neighbouring points (2,3,6,7) defining that cell, i.e., the values (1.11 / 1.15 / 1.12 / 1.16) stored in these points are adapted according to where the operating point is located relative to the measured data $d = 1.09$. The adapted value y = 1.142 for the operating point is found by interpolation of the adapted neighbouring points. Interpolation is necessary in order to get smooth outputs. However the suggested method results in problems, because interpolation could not be used together with adaptation in the way described in US 2003/0122826 A1.

Figures 4a, 4b, 4c illustrate in a sequence of pictures what happens if interpolation is used with adaptation. For simplifying explanations the following is based on a one-dimensional case.

Starting from a lookup table with three gridlines, which shrink in the one-dimensional case to grid points, $x_1$, $x_2$, $x_3$, and the output function $y(x)$ to be generated (dashed line), the stored values $y(x_1)$, $y(x_2)$, $y(x_3)$ at the grid points are initialized at zero (Figure 4a). If the first adaptation happens at operating point $x_{first}$, the data found by interpolation and stored for $x_2$ and $x_3$ will converge to incorrect values if - for example - updating weights are inversely proportional to the distance from the point $x_{frst}$ (Figure 4b). If the operating point then happens to move relatively quickly to $x_{later}$ where more adaptation occurs, then the data stored for $x_1$ and $x_2$ will diverge even more, as shown in Figure 4c. Comparing the interpolated values for $y(x_1)$, $y(x_2)$, $y(x_3)$ with the true values given by the output function $y(x)$ (dashed line) it is obvious that the output data generated by this method are not of high quality.

One way of dealing with this problem is not to use interpolation altogether for adaptive maps. If such cell-based updating is used for lookup tables, the output will not be smooth. In fact, whenever the cell is changed, there is a discontinuity in the output signal.

With respect to this it is an objective of the present invention to provide a method for automatically adapting lookup tables according to the preamble of claim 1, which overcomes the problems described above.

According to the present invention and with respect to the object, a method for automatically adapting lookup tables, in particular for using in a control unit for an internal combustion engine, is provided, wherein the lookup table is a one-dimensional or multi-dimensional point-based lookup table with n ≥ 1 indexing parameters as input data and in which the output data are stored at the points (storage points), and which is characterised in that

■ a value domain $\Delta x$ for each indexing parameter is assigned to each point of the point-based lookup table, said value domain $\Delta x$ comprising said respective point, such that each point is surrounded by said value domain $\Delta x$, and
■ the output data is adapted if the operation point defined by the input data leads to a location in the lookup table which lies inside a value domain $\Delta x$, and
■ the output data is interpolated if the operation point defined by the input data leads to a location in the lookup table which lies outside a value domain $\Delta x$, i.e., between the values domains $\Delta x$.

In contrast to the conventional method according to the US 2003/0122826 A1 decribed above in the introduction, adaptation and interpolation are separated and are not applied in one operation point, which is defined by the input data.

In particular adaptation is carried out within pre-determined value domains $\Delta x$ without interpolation, while interpolation is carried out in the areas between these value domains $\Delta x$ without adaptation.

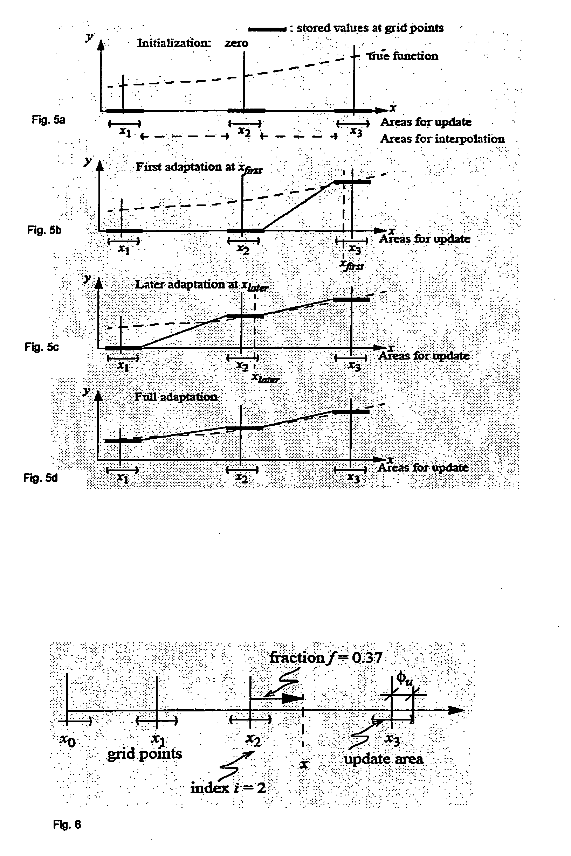

An embodiment for a one-dimensional case is illustrated in Figures 5a, 5b, 5c and 5d which will be described in detail below and which will make the inventive method more apparent.

A preferred embodiment of the method is characterised in that at least one point of the point-based lookup table lies in the middle of at least one value domain $\Delta x$ assigned to said at least one point. Preferably all points lie in the middle of the value domains $\Delta x$ assigned to them.

A preferred embodiment of the method is characterised in that the storage points of at least one indexing parameter x take on values from a pre-determined set of values, where the increment $i$ between neighbouring storage points is constant. In most of the applications the storage points of all indexing parameter x used as input data will assume values from pre-determined sets of values. This embodiment leads to a consistent arrangement of the points of the lookup table, which is preferred. This simplifies the implementation of the algorithm.

A preferred embodiment of the method is characterised in that for at least one indexing parameter $x$ the width $w$ of the respective value domain $\Delta x$ is equal for each point.

A preferred embodiment of the method is characterised in that the width **w** of said value domain $\Delta \textbf{x}$ of at least one indexing parameter $x$ assigned to a point is commensurate with the respective increment $i$ of said at least one indexing parameter **x.**

A preferred embodiment of the method is characterised in that the relation between the width w of said value domain $\Delta x$ of at least one indexing parameter $x$ and the respective increment $i$ of said at least one indexing parameter $x$ is described by the following inequality: $w < 0.9\ i$.

A preferred embodiment of the method is characterised in that the relation between the width $w$ of said value domain $\Delta x$ of at least one indexing parameter $x$ and the respective increment $i$ of said at least one indexing parameter **x** is described by the following inequality: $w < 0.75\ i$, preferably $w < 0.6\ i$

A preferred embodiment of the method is characterised in that the relation between the width w of said value domain $\Delta x$ of at least one indexing parameter **x** and the respective increment $i$ of said at least one indexing parameter **x** is described by the following inequality: $w < 0.5\ i$, preferably $w < 0.35\ i$.

A preferred embodiment of the method is characterised in that a discrete-time integrating controller is used for adaptation.

Two embodiments of the present invention will be described below with reference to the Figures 5a, 5b, 5c, 5d, 6 and 7:

Figure 1       shows schematically a controller setup with slow feedback and fast feedforward control based on an automatically adapting lookup table,

Figure 2       shows schematically a cell-based lookup table disclosed in the US 2003/0122826 A1,

Figure 3       shows schematically a point-based lookup table disclosed in the US 2003/0122826 A1,

Figure 4a       shows schematically a one-dimensional lookup table initialized to zero for demonstrating the problems arising by using interpolation together with adaptation according to a conventional method for adaptation,

Figure 4b       shows schematically the lookup table illustrated in Figure 4a after a first adaptation,

Figure 4c       shows schematically the lookup table illustrated in Figure 4a after a later adaptation,

Figure 5a       shows schematically a one-dimensional lookup table initialized to zero for demonstrating a first embodiment of the inventive method for automatically adapting point-based lookup tables,

Figure 5b       shows schematically the lookup table illustrated in Figure 5a after a first adaptation,

Figure 5c       shows schematically the lookup table illustrated in Figure 5a after a later adaptation,

Figure 5d       shows schematically the lookup table illustrated in Figure 5a after a full adaptation,

Figure 6       shows schematically a one-dimensional lookup table for demonstrating the addressing of locations in the table, and

Figure 7       shows schematically a two-dimensional lookup table for demonstrating

the addressing of locations in the table.

Figures 1 to 4c are already described within the introduction in order to point out the known methods according to the state of the art and the problems resulting from this.

Figures 5a, 5b, 5c and 5d illustrate in a sequence of pictures what happens if interpolation and adaptation are used according to a first embodiment of the inventive method. For simplifying explanations the following is based on a one-dimensional case. By doing so a comparison with the conventional method illustrated in Figures 4a, 4b and 4c is made easier.

Figure 5a shows schematically a point-based lookup table with $n = 1$ indexing parameter x as input data and in which the output data $y$ are stored at the points $x_1$, $x_2$, $x_3$ (storage points). The increment $i$ between neighbouring storage points $x_1$, $x_2$, $x_3$ varies. The output function $y(x)$ to be generated by the method for adaptation is represented by the dashed line (true function); the values $y(x_1)$, $y(x_2)$, $y(x_3)$ are stored at the storage points $x_1$, $x_2$, $x_3$.

To each point $x_1$, $x_2$, $x_3$ a value domain $\Delta x$ is assigned, so that each point $x_1$, $x_2$, $x_3$ is surrounded by said value domain $\Delta x$. The value domain $\Delta x$ is represented by a double arrow (solid line) and in the shown embodiment each storage point $x_1$, $x_2$, $x_3$ lies in the middle of the respective value domain $\Delta x$ assigned to said point. The value domain $\Delta x$ has a width $w \approx 0.3\ i$. The width w of the value domains $\Delta x$ is equal for all storage points.

Because of the small width w of the value domains $\Delta x$, in particular because $w < i$, areas are formed between the value domains represented also by a double arrow (dashed line).

If the operation point defined by the input data $x$ lies inside a value domain $\Delta x$, the output data $y$ is adapted (areas for update). If the operation point defined by the input data $x$ lies outside a value domain, i.e., between the values domains, the output data is interpolated (areas for interpolation). At the beginning all stored values $y(x_1)$, $y(x_2)$, $y(x_3)$ at the storage points are initialized at zero (Figure 5a).

The first adaptation happens if an input data $x_{first}$ lies within a value domain. According to Figure 5b the first input data lies in the value domain $\Delta x_3$ of the storage point $x_3$. The adapted output data $y(x_3)$ is stored at this storage point $x_3$.

After the first adaptation output data y is read from the storage point $x_3$ if the input data $x$ lies inside the value domain of said storage point $x_3$. If the input data $x$ lies outside a value domain - for example between the value domains of $x_2$ and $x_3$ - the output data is found by interpolation as illustrated by the straight line connecting the edges of the value domains $\Delta x_2$ and $\Delta x_3$ of the storage points $x_2$ and $x_3$ (see Figure 5b). If the input data $x$ lies between the value domains of $x_1$ and $x_2$, the output data is also found by interpolation, but because of initialization of all stored values $y(x_1)$, $y(x_2)$, $y(x_3)$ to zero at the beginning the straight line for interpolation in this area still corresponds to the x-axis.

When the operating point then moves to $x_{later}$ more adaptation occurs, if the input data x lies inside a value domain, as shown in Figure 5c. In the illustrated embodiment the input data $x_{rater}$ lies inside the value domain $\Delta x_2$, so that the adapted output data $y(x_{later})$ is stored at the storage point $x_2$.

Figure 5d shows the fully adapted lookup table. As can be seen the output function $y(x)$ generated by adaptation and interpolation represents the true function (dashed line) with high quality.

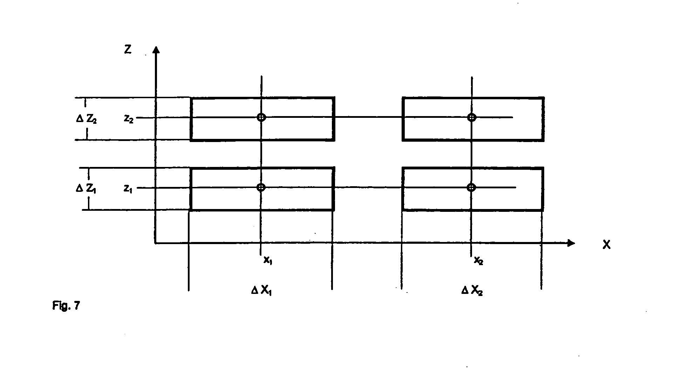

Figure 6 shows schematically a one-dimensional lookup table for demonstrating the addressing of locations in the table and the method used for deciding if adaptation or interpolation is used.

The location in the table can be described with indices $i_n$, indicating the closest grid point $x_0$, $x_1$, $x_2$, $x_3$ which is smaller than or equal to the operating point, $x$, and a fraction, $f$, in the interval [0, 1) which indicates the distance from this grid point. Update and interpolation areas can then be defined based on the fractions $f$. For

$$f < \phi_u \quad \text{or} \quad (1 - f) < \phi_u \tag{1}$$

where $\phi_u$ ($0 < \phi_u < 0.5$) designates a threshold, update takes place.

Figure 7 shows schematically a two-dimensional lookup table for demonstrating the addressing of locations in the table.

For two dimensional tables the indices $i_1$, $i_2$ for the element $(x,z)$ in the table which is updated is given by:

$$\begin{cases} i_1 & \text{for} \quad f_1 < \phi_u \\ i_1 \leftarrow i_1 + 1 & \text{for } f_1 > 1 - \phi_u \end{cases}$$

$$\begin{cases} i_2 & \text{for} \quad f_2 < \phi_u \\ i_2 \leftarrow i_2 + 1 & \text{for } f_2 > 1 - \phi_u \end{cases}$$

The easiest way for updating the stored values is to treat them as the storage of a discrete integrating controller.

$$m(i_1, i_2) \leftarrow m(i_1, i_2) + k_I e$$

where m denotes the table, $m(i_1, i_2)$ the element of that table which is being updated, $k_I$, a gain, and $e$ the control error.

Interpolation happens whenever the operating point $(x,z)$ is outside of the update areas $\Delta x$, $\Delta z$. The fraction $f$ is first converted into a fraction, $f_{int}$, in between the update areas $\Delta x$, $\Delta z$.

$$f_{int} = \frac{f - \phi_u}{1 - 2\phi_u}$$

which then is used for the interpolation (this is to avoid step changes at the edge of the update areas if interpolation was based on the whole interval). In one dimension, the interpolation reads

$$u = m(i) + f_{int}(m(i+1) - m(i));$$

in two dimensions

$$u = (1 - f_{int,1})(1 - f_{int,2})m(i_1, i_2) + f_{int,1}(1 - f_{int,2})m(i_1 + 1, i_2) +$$
$$+ (1 - f_{int,1})f_{int,2}m(i_1, i_2 + 1) + f_{int,1}f_{int,2}m(i_1 + 1, i_2 + 1).$$

The advantage of the method for adapting a table is the smoothness of the resulting read-out. The feedback loop is only closed for the update areas. In the interpolation areas, the measured values are not taken into account, but feedforward alone is used.

**Reference signs**

| | |
|---|---|
| $A$ | indexing parameter |
| $B$ | indexing parameter |
| $e$ | control error |
| $f$ | fraction |
| $f_{int}$ | fraction |
| $i$ | increment |
| $in$ | indices for $n$ indexing parameters |
| $i_1$ | indices for indexing parameter $x$ |
| $i_2$ | indices for indexing parameter $z$ |
| $k_1$ | gain of a discrete-time integrating controller |
| $n$ | number of indexing parameters |
| N | engine speed |
| T | torque demand |
| $T_{ind,setpt}$ | indicated torque demand |
| $w$ | width of value domain |
| $x$ | indexing parameters, input data |
| $x_1$ | grid point, storage point |
| $x_2$ | grid point, storage point |
| $x_3$ | grid point, storage point |
| $\Delta x$ | value domain, update area |
| $\Delta x_1$ | value domain of storage point $x_1$ |
| $\Delta x_2$ | value domain of storage point $x_2$ |
| $\Delta x_3$ | value domain of storage point $x_3$ |
| $x_{first}$ | input data x for first adaptation |
| $x_{later}$ | input data x for later adaptation |
| $y(x)$ | output function to be generated |
| $y(x_1)$ | stored values at grid point $x_1$ |
| $y(x_2)$ | stored values at grid point $x_2$ |
| $y(x_3)$ | stored values at grid point $x_3$ |
| $z$ | indexing parameters, input data |
| $\Delta z$ | value domain, update area |

**Claims**

1. A method for automatically adapting lookup tables, in particular for using in a control unit for an internal combustion engine, wherein the lookup table is a one-dimensional or multi-dimensional point-based lookup table with $n \geq 1$ indexing parameters as input data and in which the output data are stored at the points (storage points), **characterised in that**

   ■ a value domain $\Delta x > 0$ for each indexing parameter $x$ is assigned to each point of the point-based lookup table, where said value domain $\Delta x$ comprising said respective point, such that each point is surrounded by said value domain $\Delta x$, and
   ■ the output data is adapted if the operation point defined by the input data leads to a location in the lookup table which lies inside a value domain $\Delta x$, and
   ■ the output data is interpolated if the operation point defined by the input data leads to a location in the lookup table which lies outside a value domain $\Delta x$, i.e., between the values domains $\Delta x$.

2. A method according to claim 1, **characterised in that** at least one point of the point-based lookup table lies in the middle of at least one value domain $\Delta x$ assigned to said at least one point.

3. A method according to claim 1 or 2, **characterised in that** the storage points of at least one indexing parameter $x$ take on values from a pre-determined set of values, for which the increment i between neighbouring storage points is constant.

4. A method according to any of the preceding claims, **characterised in that** for at least one indexing parameter $x$ the width $w$ of the respective value domain $\Delta x$ is equal for each point.

5. A method according to claim 3 or 4, **characterised in that** the width w of said value domain $\Delta x$ of at least one indexing parameter $x$ assigned to a point is commensurate with the respective increment $i$ of said at least one indexing parameter $x$.

6. A method according to claim 4, **characterised in that** the relation between the width w of said value domain $\Delta x$ of at least one indexing parameter $x$ and the respective increment $i$ of said at least one indexing parameter $x$ is described by the following inequality: $w < 0.9\ i$.

7. A method according to claim 4 or 6, **characterised in that** the relation between the width $w$ of said value domain $\Delta x$ of at least one indexing parameter $x$ and the respective increment $i$ of said at least one indexing parameter $x$ is described by the following inequality: $w < 0.75\ i$.

8. A method according to any of the preceding claims, **characterised in that** a discrete-time integrating controller is used for adaptation

**Patentansprüche**

1. Verfahren zur automatischen Anpassung von Nachschlagetabellen, insbesondere zur Verwendung in einer Steuereinheit für einen Verbrennungsmotor, wobei die Nachschlagetabelle eine eindimensionale oder mehrdimensionale punktbasierte Nachschlagetabelle mit $n \geq 1$ Indexierungsparametern als Eingabedaten ist und wobei die Ausgabedaten an den Punkten (Speicherpunkten) gespeichert werden, **dadurch gekennzeichnet, dass**

   • jedem Punkt der punktbasierten Nachschlagetabelle ein Wertebereich $\Delta x > 0$ für jeden Indexierungsparameter x zugeordnet wird, wobei der Wertebereich $\Delta x$ den jeweiligen Punkt enthält, dergestalt, dass jeder Punkt von dem Wertebereich $\Delta x$ umgeben ist, und
   • die Ausgabedaten angepasst werden, wenn der Operationspunkt, der durch die Eingabedaten definiert wird, zu einer Stelle in der Nachschlagetabelle führt, die innerhalb eines Wertebereichs $\Delta x$ liegt, und
   • die Ausgabedaten interpoliert werden, wenn der Operationspunkt, der durch die Eingabedaten definiert wird, zu einer Stelle in der Nachschlagetabelle führt, die außerhalb eines Wertebereichs $\Delta x$, d. h. zwischen den Wertebereichen $\Delta x$, liegt.

**2.** Verfahren nach Anspruch 1, **dadurch gekennzeichnet, dass** mindestens ein Punkt der punktbasierten Nachschlagetabelle inmitten mindestens eines Wertebereichs $\Delta x$ liegt, der dem mindestens einen Punkt zugeordnet ist.

**3.** Verfahren nach Anspruch 1 oder 2, **dadurch gekennzeichnet, dass** die Speicherpunkte mindestens eines Indexierungsparameters x Werte aus einem zuvor festgelegten Satz von Werten annehmen, für den das Inkrement i zwischen benachbarten Speicherpunkten konstant ist.

**4.** Verfahren nach einem der vorangehenden Ansprüche, **dadurch gekennzeichnet, dass** für mindestens einen Indexierungsparameter x die Breite w des jeweiligen Wertebereichs $\Delta x$ für jeden Punkt gleich ist.

**5.** Verfahren nach Anspruch 3 oder 4, **dadurch gekennzeichnet, dass** die Breite w des Wertebereichs $\Delta x$ mindestens eines Indexierungsparameters x, der einem Punkt zugeordnet ist, mit dem jeweiligen Inkrement i des mindestens einen Indexierungsparameters x übereinstimmt.

**6.** Verfahren nach Anspruch 4, **dadurch gekennzeichnet, dass** die Beziehung zwischen der Breite w des Wertebereichs $\Delta x$ mindestens eines Indexierungsparameters x und dem jeweiligen Inkrement i des mindestens einen Indexierungsparameters x durch die folgende Ungleichheit beschrieben wird: w < 0,9 i.

**7.** Verfahren nach Anspruch 4 oder 6, **dadurch gekennzeichnet, dass** die Beziehung zwischen der Breite w des Wertebereichs $\Delta x$ mindestens eines Indexierungsparameters x und dem jeweiligen Inkrement i des mindestens einen Indexierungsparameters x durch die folgende Ungleichheit beschrieben wird: w < 0,75 i.

**8.** Verfahren nach einem der vorangehenden Ansprüche, **dadurch gekennzeichnet, dass** eine Diskretzeitintegrationssteuereinheit für die Anpassung benutzt wird.

**Revendications**

**1.** Procédé d'adaptation automatique de tables de consultation, en particulier destiné à être utilisé dans une unité de commande d'un moteur à combustion interne, dans lequel la table de consultation est une table de consultation à base de points unidimensionnels ou bidimensionnels avec $n \geq 1$ paramètres d'indexation comme données d'entrée et dans lequel les données de sortie sont mémorisées au niveau des points (points de mémorisation),
**caractérisé en ce que**

• Un domaine de valeurs $\Delta x > 0$ pour chaque paramètre d'indexation $x$ est assigné à chaque point de la table de consultation à base de points, où ledit domaine de valeurs $\Delta x$ comprend ledit point respectif, de telle sorte que chaque point soit entouré par ledit domaine de valeurs $\Delta x$, et
• Les données de sortie sont adaptées si le point d'opération défini par les données d'entrée conduit à un emplacement dans la table de consultation qui repose à l'intérieur d'un domaine de valeurs $\Delta x$, et
• Les données de sortie sont interpolées si le point d'opération défini par les données d'entrée conduisent à un emplacement dans la table de consultation qui repose en dehors d'un domaine de valeurs $\Delta x$, c.-à-d. entre les domaines de valeur $\Delta x$.

**2.** Procédé selon la revendication 1, **caractérisé en ce qu'**au moins un point de la table de consultation à base de points repose au milieu d'au moins un domaine de valeurs $\Delta x$ assigné audit au moins un point.

**3.** Procédé selon la revendication 1 ou 2, **caractérisé en ce que** les points de mémorisation d'au moins un paramètre d'indexation $x$ prend des valeurs provenant d'un ensemble prédéterminé de valeurs, pour lesquelles l'incrément i entre des points de mémorisation voisins est constant.

**4.** Procédé selon l'une quelconque des revendications précédentes, **caractérisé en ce que** pour au moins un paramètre d'indexation $x$, la largeur w du domaine de valeurs $\Delta x$ est égale pour chaque point.

**5.** Procédé selon la revendication 3 ou 4, **caractérisé en ce que** la largeur w dudit domaine de valeurs $\Delta x$ d'au moins un paramètre d'indexation $x$ assigné à un point est proportionnelle à l'incrément $i$ dudit au moins un paramètre d'indexation $x$.

**6.** Procédé selon la revendication 4, **caractérisé en ce que** la relation entre la largeur w dudit domaine de valeurs $\Delta x$

d'au moins un paramètre d'indexation $x$ et l'incrément respectif $i$ dudit au moins un paramètre d'indexation $x$ est décrite par l'inégalité suivante : $w < 0{,}9\ i$.

7. Procédé selon la revendication 4 ou 6, **caractérisé en ce que** la relation entre la largeur $w$ dudit domaine de valeurs $\Delta x$ d'au moins un paramètre d'indexation $x$ et l'incrément respectif $i$ dudit au moins un paramètre d'indexation $x$ est décrite par l'inégalité suivante : $w < 0{,}75\ i$.

8. Procédé selon l'une quelconque des revendications précédentes, **caractérisé en ce qu'**un contrôleur d'intégration à temps discret est utilisé pour l'adaptation.

Figure 1

Figure 2

Figure 3

Fig. 4a

Fig. 4b

Fig. 4c

Fig. 5a

Fig. 5b

Fig. 5c

Fig. 5d

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030122826 A1